# EUROPÄISCHE PATENTSCHRIFT

(11) **EP 0 517 780 B1**
(45) Veröffentlichungstag und Bekanntmachung des Hinweises auf die Patenterteilung: **25.01.1995**
(21) Anmeldenummer: 91905404.9
(22) Anmeldetag: 28.02.1991
(51) Int. Cl.: F16J 15/32

(54) **DICHTUNGSANORDNUNG**
SEALING ARRANGEMENT
DISPOSITIF D'ETANCHEITE

(30) Priorität: 28.02.1990 DE 4006258
(43) Veröffentlichungstag der Anmeldung: 16.12.1992
(73) Patentinhaber: Busak + Shamban GmbH & Co., D-70565 Stuttgart (DE)
(72) Erfinder: EDLUND, Roy, D-7022 Echterdingen (DE)
(74) Vertreter: KOHLER SCHMID + PARTNER
(86) Internationale Anmeldenummer: DE9100193
(87) Internationale Veröffentlichungsnummer: WO9113276

(56) Entgegenhaltungen:
- CH-A- 417 250

## Beschreibung

Die Erfindung geht aus von einer Dichtungsanordnung zum Abdichten des Spalts zwischen zwei zueinander konzentrischen, gegeneinander beweglichen Maschinenteilen, von denen das erste Maschinenteil eine glatte Anlagefläche und das zweite Maschinenteil einen zur Anlagefläche des ersten Maschinenteils gerichteten profilierten Abschnitt mit einer ersten Flanke, einer zweiten Flanke und einem die Flanken verbindenden Nutgrund aufweist, mit einem gegenüber dem zweiten Maschinenteil mittels des profilierten Abschnitts axial fixierten, an der Anlagefläche des ersten Maschinenteils dichtend anliegenden Dichtring, wobei am Dichtring eine Dichtkante vorgesehen ist, und das der Dichtring einen halbkreisförmigen Querschnitt aufweist.

Ein derartiges Dichtelement ist durch eine Veröffentlichung in "India Rubber World", Band 125, Nr. 5, Februar 1952, Seiten 575 bis 578, 581, New York, U. S.; T. J. McCUISTION: "A New Rotary Seal for High-Speed and High-Pressure Applications" bekanntgeworden.

O-Ringe werden aus elastischen Werkstoffen als Dichtelement selbst oder als Federelement für Kombinationsdichtungen eingesetzt. Sie können sowohl axial und/oder radial gerichteten Verformungskräften ausgesetzt sein. Obwohl der O-Ring das querschnittsmäßig kleinste Dichtelement ist, ist der Einbauraum teilweise so eng bemessen, daß nur im Schnurstärkendurchmesser kleine O-Ringe beispielsweise zur Abdichtung oszillierender Maschinenteile eingesetzt werden können. Aus dem Maß der Verformung oder Verpressungen des O-Ringes ergibt sich die Dichtkraft. Die durch die Verformung hervorgerufene Reaktionskraft und der Druck des abzudichtenden Mediums ergeben in der Summe die für die Dichtung erforderliche Anpreßkraft. Ist aber die Schnurdicke gering und ist die Einbaunut ungenau gefertigt, so sind die daraus möglicherweise resultierenden Schwierigkeiten nicht durch eine höhere Verpressung des Schnurquerschnitts ausgleichbar, weil dazu eine größere Schnurdicke erforderlich wäre. Die Einbauverhältnisse schließen aber die Verwendung von O-Ringen größerer Schnurdicke aus.

Das bekannte Dichtelement wird nach der Lehre der Druckschrift als Rotationsdichtung eingesetzt. Dabei wirkt wie Figur 6 dieser Druckschrift zeigt das unter Druck stehende Medium auf die plane Fläche des Dichtelements. Eine Druckentlastung des Dichtelements durch das Medium selbst ist bei dieser Anordnung nicht möglich. Auch besteht die Gefahr, daß sich das bekannte Dichtelement mit dem rotierenden Maschinenteil bewegt. Zum Abdichten von hin- und herbewegten Maschinenteilen ist das bekannte Dichtelement nicht einsetzbar.

Der Erfindung liegt daher die Aufgabe zugrunde, ein Dichtelement der eingangs genannten Art dahingehend weiterzubilden, daß es mit einem Pressungsmaximum und einer geringen Auflagefläche auf einer abzudichtenden Fläche aufliegt.

Diese Aufgabe wird erfindungsgemäß dadurch gelöst, daß die Dichtkante eine sich zur zweiten Flanke hin öffnende Regelfläche aufweist, oder einen ersten axial gerichteten Flächenabschnitt und einen zweiten radial gerichteten Flächenabschnitt in bezug auf die Dichtringachse aufweist, der zur zweiten Flanke hinweist.

Das erfindungsgemäße Dichtelement hat damit den wesentlichen Vorteil, daß die Dichtkante besonders reibungsarm an der abzudichtenden Fläche anliegt. Sowohl gegenüber dem beabstandeten Maschinenteil wie auch gegenüber der Nutgrundfläche läßt sich damit eine wirksame Abdichtung erzielen. Das erfindungsgemäße Dichtelement ist entweder mit einer symmetrisch ausgebildeten Umfangsfläche oder mit einer radial gerichteten planen Fläche der Hochdruckseite zugewandt. Damit kann effektiv einer Verformung des Dichtrings unter Druck entgegengewirkt werden. Die erfindungsgemäße Dichtkante hat den Vorteil, daß sie ohne ihre ursprünglich gewollte Form zu verlieren, auf Grund plastischer Verformung beim Einbau fließen kann. Somit bleibt auch nach dem Einbau eine wirksame Dichtkante ausgebildet. Ist die erfindungsgemäße Dichtkante druckbelastet und werden hin- und herbewegte Teile gegeneinander abgedichtet, so kann auf Grund der zur Dichtkante gekrümmten Umfangsfläche Medium aus dem Niederdruckbereich in den Hochdruckbereich gefördert werden. Ist die plane zur gekrümmten Umfangsfläche diametrale Fläche der Hochdruckseite zugewandt, so werden bevorzugt hin- und herbewegte Maschinenteile gegeneinander abgedichtet. Ist dies der Fall, so ist die plane Fläche des Dichtrings von der Flanke beabstandet und der Dichtring liegt mit seiner gekrümmten Umfangsfläche an der dazu gegenüber liegenden Flanke an, die zur Niederdruckseite hinweist.

Weiterhin hat die erfindungsgemäße Dichtungsanordnung den Vorteil, daß es an baulich fest vorgegebene Einbauverhältnisse anpaßbar ist und in kleinsten Profilierungen ausreichend Platz findet. Schon vorhandene Formen zur Herstellung von O-Ringen können mit nur geringen Abänderungen auch für die Herstellung des erfindungsgemäßen Dichtelements eingesetzt werden. Weist der erfindungsgemäße Dichtring einen halbkreisförmigen Querschnitt auf, so kann in axiale Richtung gesehen die Hälfte eines ursprünglich notwendigen Einbauraums eingespart werden. Die Nuttiefe kann groß gehalten werden. Damit ist eine dauerhafte Druckverformung besser kompensierbar. In vorgegebene Rechtecknuten können erfindungsgemäße Dichtringe eingesetzt werden, die gegenüber den bisher zum Einsatz kommenden Rundschnurdichtringen einen wesentlich größeren Durchmesser bezogen auf den Durchmesser der Rundschnurringe aufweisen. Daraus folgt, daß sich mit dem erfindungsgemäßen Dichtring gegenüber dem bekannten wesentlich größere Dichtkräfte erzeugen lassen. Auch kann der im Querschnitt halbkreisförmige Dichtring mit schon vorhandenen Formen für O-Ringe hergestellt werden, indem man nur eine Halbschale der Herstellungsform verwendet und als Gegenstück zur Abdeckung der entsprechend profilierten Halbschale eine glatte Platte einsetzt.

Ist der erfindungsgemäße Dichtring aus gummielastischem Material gefertigt, so kann er überall dort eingesetzt werden, wo auch die bekannten O-Ringe zur Abdichtung von Maschinenteilen eingesetzt werden. Vorteilhaft ist beim erfindungsgemäßen Dichtring, daß er gegenüber den bekannten O-Ringen weniger Platz benötigt und daß gegenüber herkömmlichen O-Ringen am erfindungsgemäßen Dichtring auch eine Dichtkante ausgebildet ist. Wird der erfindungsgemäße Dichtring aus zähelastischem Material gefertigt, so bezieht dieser Dichtring seine Dichtkraft aus der elastischen Verformung eines Vorspannelements, mit dem der aus zähelastischem Material gefertigte Dichtring zusammenwirkt. Das Vorspannelement kann ein gummielastischer Spannring oder Spannringe sein bzw. eine Schrauben-, Schlauch-oder Blattfeder. Ist der Dichtring aus dem zähelastischen Werkstoff Polyurethan gefertigt, so kann das Vorspannelement entfallen.

Zur Stabilisierung des erfindungsgemäßen Dichtrings kann am Dichtring ein Stützring aus Metall, Keramik oder einem sonstigen, gegenüber dem Dichtring härteren Werkstoff eingesetzt werden. Mit dem Stützring wird der Dichtring stabilisiert. Weiterhin verhindert ein oder mehrere Stützringe ein Fließen oder Verformen des Dichtringmaterials unter Druck. Der Stützring ist gegenüber dem aus elastischem Material gefertigten Dichtring steif und hart und trägt zur Formstabilität des Dichtrings bei. Vorteilhaft können deshalb auch mehrere Stützringe sein, die jeweils Teilabschnitte des Dichtrings stützen.

Der Dichtring kann auch an seiner Dichtkante, im Querschnitt gesehen, der gekrümmten Umfangsfläche gegenüberliegend, einen radial und axial zur Dichtringachse ausgebildeten ersten und zweiten Flächenabschnitt aufweisen, die den Dichtring je nach Größe der Ausbildung dieser Flächenabschnitte druckentlasten können, wenn an diesen Flächenabschnitten das unter Druck stehende Medium anliegt.

Die erfindungsgemäße Dichtungsanordnung entspricht damit allen erweiterten Anforderungen, die im Bereich der Dichtungstechnik gestellt werden. Der Dichtring kann in axial engen und tiefen Rechtecknuten Platz finden, er kann aber auch in anderen Nuten, wie in eine Trapez- oder Dreiecksnut eingesetzt werden. Wird der erfindungsgemäße Dichtring anstatt eines O-Ringes eingesetzt, so ist die Materialersparnis erheblich und der erfindungsgemäße Dichtring ist auch kostengünstiger zu fertigen. Der erfindungsgemäße Dichtring kann ferner oberflächenbehandelt sein oder dem Material können Gleitmittel beigemischt sein. Der Dichtring kann als rotierende Abdichtung in der Hydraulik oder aber auch als Hydraulikabdichtung bei axialer Bewegung Verwendung finden.

Weitere Vorteile ergeben sich aus der Beschreibung und der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter.

Die Erfindung ist in der Zeichnung dargestellt und wird anhand von Ausführungsbeispielen näher erläutert. Es zeigen:
- Fig. 1: eine erfindungsgemäße Dichtungsanordnung mit einem halbkreisförmigen Dichtring und einer erfindungsgemäßen Dichtkante;
- Fig. 2: eine erfindungsgemäße Dichtungsanordnung mit einem im Querschnitt halbkreisförmigen Dichtring, mit einer erfindungsgemäßen Dichtkante und einem Stützring.

Die einzelnen Figuren der Zeichnung zeigen den erfindungsgemäßen Gegenstand teilweise stark schematisiert und sind nicht maßstäblich zu verstehen. Die Gegenstände der einzelnen Figuren sind so dargestellt, daß ihr Aufbau bestmöglichst gezeigt werden kann.

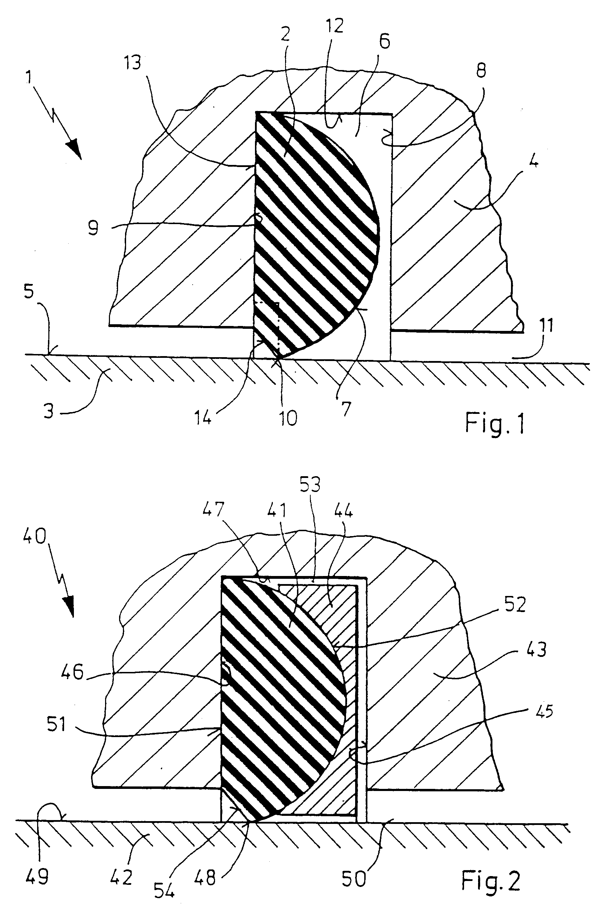

Figur 1 zeigt eine Dichtungsanordnung 1, in der gezeigten Ausführung eine Rotationsdichtungsanordnung, bei der ein Dichtring 2 aus einem gummielastischen Material an einem ersten Maschinenteil 3 anliegt und durch ein zweites Maschinenteil 4 lagefixiert ist. Das erste Maschinenteil 3, beispielsweise eine Welle, weist eine glatte Anlagefläche 5 auf und das zweite Maschinenteil 4 ist mit einem profilierten Abschnitt 6 versehen. In dem profilierten Abschnitt 6, hier eine Rechtecknut, ist der Dichtring 2 angeordnet. Ist der profilierte Abschnitt 6 als Rechtecknut ausgebildet, so liegt der Dichtring 2 mit der gekrümmten Umfangsfläche 7 beabstandet von einer ersten Flanke 8 der Rechtecknut ganzflächig an einer zweiten Flanke 9 des profilierten Abschnittes 6 an. Über eine Dichtkante 10 ist ein Spalt 11 zwischen den zueinander bewegten ersten und zweiten Maschinenteilen 3, 4 abgedichtet. Ein Nutgrund 12, der die erste Flanke 8 mit der zweiten Flanke 9 verbindet, begrenzt den profilierten Abschnitt 6 in der Tiefe. Mit einer radial gerichteten planen Fläche 13 liegt der Dichtring 2 ganzflächig an der zweiten Flanke 9 an. Von der Schnittlinie der gekrümmten Umfangsfläche 7 und einer Kegelfläche 14, die in die radial, hier senkrecht gerichtete Fläche 13 übergeht, wird die Dichtkante 10 gebildet. Die radiale Erstreckung des Dichtrings 2 verläuft von dem Nutgrund 12 bis zu der Anlagefläche 5. Im eingebauten Zustand ist der Dichtring 2 im profilierten Abschnitt 6 vorgespannt. Der Dichtring 2 ist aus einem gummielastischen Material, einem Elastomer, gefertigt.

Bewegt sich das Maschinenteil 3 axial zu dem Maschinenteil 4 (Hin- und Herbewegung), so liegt der Dichtring 2 mit seiner gekrümmten Umfangsfläche 7 an der ersten Flanke 8 an. Das unter Druck stehende Medium wirkt auf die Fläche 13 und es entsteht eine Beabstandung zwischen der zweiten Flanke 9 und der Fläche 13.

Mit strichpunktierten Linien ist in der Fig. 1 eine zweite erfindungsgemäße Dichtkantenausbildung gezeigt, wie sie zur zweiten Flanke 9 hinweisend ausgebildet sein kann.

In Figur 2 ist eine Dichtungsanordnung 40 mit einem Dichtring 41, einem ersten Maschinenteil 42 und einem zweiten Maschinenteil 43 gezeigt, wobei der Dichtring 41 von einem Stützglied 44 gehalten ist. Das Stützglied 44 ist als Stützring ausgebildet. Der gummielastische Dichtring 41 und ein weitgehend unverformbarer Stützring 44 sind in einer Rechtecknut fixiert gehalten, die eine erste Flanke 45, eine zweite Flanke 46 und einen Nutgrund 47 aufweist. Der Stützring 44 ist von der ersten Flanke 45 beabstandet. Zum ersten Maschinenteil 42 hin ist die Rechtecknut geöffnet. Mit einer Dichtkante 48, die zu einer Anlagefläche 49 des ersten Maschinenteils 42 hinweist, wird ein Spalt 50 zwischen dem ersten und zweiten Maschinenteil 42, 43 abgedichtet.

Der Dichtring 41 liegt mit einer zur Achse des Dichtrings 41 senkrechten Fläche 51 an der zweiten Flanke 46 an. Der Dichtring 41 liegt auch am Nutgrund 47 an. Das Stützglied 44 ist in einer Art und Weise ausgeformt, daß es in einem weiten Bereich an einer gekrümmten Umfangsfläche 52 des Dichtringes 41 anliegt. Mit seiner dazu diametralen Fläche ist das Stützglied 44 von der ersten Flanke 45 beabstandet. Zum Nutgrund 47 und zur Anlagefläche 49 ist der Stützring 44 ebenfalls beabstandet. Im druckbeaufschlagten Zustand ist der Stützring 44 der Hochdruckseite zugewandt und die radiale, hier senkrecht gerichtete Fläche 51 der Niederdruckseite. Der Dichtring 41, wie er in der Figur 4 gezeigt ist, kann auch ohne Stützglied 44 in einen hier als Rechtecknut ausgeführten, profilierten Abschnitt 53 eingesetzt werden. Die Dichtkante 48 grenzt an eine Kegelfläche 54, die sich zur Niederdruckseite hin öffnet.

Mit dem Stützring 44 kann die Dichtungsanordnung nach Fig. 2 sowohl als Rotationsdichtung wie auch als Stangendichtung für Hin- und Herbewegungen eingesetzt werden.

Das unter Druck stehende Medium kann entweder am Stützring anliegen, so in Fig. 2 gezeigt, oder das unter Druck stehende Medium liegt an der Fläche 51 an. In diesem Fall ist die zweite Flanke 46 von der Fläche 51 beabstandet.

## Patentansprüche

1. Dichtungsanordnung zum Abdichten eines Spalts (11; 50) zwischen zwei zueinander konzentrischen, gegeneinander beweglichen Maschinenteilen, von denen das erste Maschinenteil (3; 42) eine glatte Anlagefläche (5; 49) und das zweite Maschinenteil (4; 43) einen zur Anlagefläche (5; 49) des ersten Maschinenteils (3; 42) gerichteten profilierten Abschnitt (6; 53) mit einer ersten Flanke (8; 45), einer zweiten Flanke (9; 46) und einem die Flanken (8; 45; 9; 46) verbindenden Nutgrund (12; 47) aufweist, mit einem gegenüber dem zweiten Maschinenteil (4; 43) mittels des profilierten Abschnitts (6; 53) axial fixierten, an der Anlagefläche (5; 49) des ersten Maschinenteils (3; 42) dichtend anliegenden Dichtring (2; 41), wobei am Dichtring (2; 41) eine Dichtkante (10; 48) vorgesehen ist, und daß der Dichtring (2; 41) einen halbkreisförmigen Querschnitt aufweist,
dadurch gekennzeichnet, daß
die Dichtkante (10; 48) eine sich zur zweiten Flanke (9; 46) hin öffnende Kegelfläche (14; 54) aufweist oder einen ersten axial gerichteten Flächenabschnitt und einen zweiten radial gerichteten Flächenabschnitt in bezug auf die Dichtringachse aufweist, der zur zweiten Flanke (9; 46) hinweist.

2. Dichtungsanordnung nach Anspruch 1,
dadurch gekennzeichnet, daß
der Dichtring (2; 41) aus einem gummielastischen Material fertigbar ist.

3. Dichtungsanordnung nach einem der Ansprüche 1 bis 2,
dadurch gekennzeichnet, daß
zumindest an einem Flächenabschnitt des Dichtrings (2; 41) ein Stützglied (44) anliegt.

4. Dichtungsanordnung nach Anspruch 3,
dadurch gekennzeichnet, daß
das Stützglied (44) an eine gekrümmte Umfangsfläche (7; 52) anpaßbar ist.

5. Dichtungsanordnung nach einem der Ansprüche 1 bis 4,
dadurch gekennzeichnet, daß
der Dichtring (2; 41) an der zweiten Flanke (9; 46) anliegt.

## Claims

1. A sealing arrangement for sealing a gap (11; 50) between two concentric machine elements which can move with respect to each other, the first machine element (3; 42) having a smooth contact surface (5; 49) and the second machine element (4; 43) having a profiled section (6; 53) which faces the contact surface (5; 49) of the first machine element (3; 42) with a first side (8; 45), a second side (9; 46) and a groove bottom (12; 47) connecting the sides (8; 45; 9; 46), and with a sealing ring (2; 41) which is axially fixed with respect to the second machine element (4; 43) by means of the profiled section (6; 53) and abuts sealingly on the contact surface (5; 49) of the first machine element (3; 42), the sealing ring (2; 41) being provided with a sealing edge (10; 48) and whereby the sealing ring (2; 41) has a semi-circular cross-section,
characterized in that
the sealing edge (10; 48) has a conical surface (14; 54) open to the second side (9; 46) or a first axially directed surface section and a second surface section which is directed radially with respect to the axis of the sealing ring and faces the second side (9; 46).

2. Sealing arrangement according to claim 1,
characterized in that
the sealing ring (2; 41) can be manufactured from a rubber elastic material.

3. Sealing arrangement according to one of claims 1 to 2,
characterized in that
a support element (44) abuts at least on one surface section of the sealing ring (2; 41).

4. Sealing arrangement according to claim 3,
characterized in that
the support element (44) is adaptable to a curved peripheral surface (7; 52).

5. Sealing arrangement according to one of claims 1 to 4,
characterized in that
the sealing ring (2; 41) abuts on the second side (9; 46).

## Revendications

1. Agencement d'étanchéité pour étancher une fente (11 ; 50) entre deux parties de machine concentriques l'une par rapport à l'autre et mobiles l'une par rapport à l'autre, parmi lesquelles la première partie de machine (3 ; 42) comporte une surface d'appui lisse (5 ; 49) et la seconde partie de machine (4 ; 43) comporte un tronçon profilé (6 ; 53) dirigé vers la surface d'appui (5 ; 49) de la première partie de machine (3 ; 42), ledit tronçon présentant un premier flanc (8 ; 45), un second flanc (9 ; 46) et un fond de gorge (12 ; 47) qui relie les flancs, et l'agencement comportant une bague d'étanchéité (2 ; 41), fixée axialement par rapport à la seconde partie de machine (4 ; 43) au moyen du tronçon profilé (6 ; 53) et appliquée de façon étanche contre la surface d'appui (5 ; 94) de la première partie de machine (3 ; 42), une arête d'étanchéité (10 ; 48) étant prévue sur la bague d'étanchéité (2 ; 41), et la bague d'étanchéité (2 ; 41) présentant une section en forme de demi-cercle,
caractérisé en ce que l'arête d'étanchéité (10 ; 48) comporte une surface conique (14 ; 54) ouverte en direction du second flanc (9 ; 46), ou un premier tronçon de surface dirigé axialement et un second tronçon de surface dirigé radialement par rapport à l'axe de la bague d'étanchéité, qui est orienté vers le second flanc (9 ; 46).

2. Agencement d'étanchéité selon la revendication 1, caractérisé en ce que la bague d'étanchéité (2 ; 41) est réalisée en un matériau élastique.

3. Agencement d'étanchéité selon l'une ou l'autre des revendications 1 et 2, caractérisé en ce qu'un organe de support (44) est appliqué sur au moins contre un tronçon de surface de la bague d'étanchéité (2 ; 41).

4. Agencement d'étanchéité selon la revendication 3, caractérisé en ce que l'organe de support (44) est ajusté à une surface périphérique bombée (7 ; 52).

5. Agencement d'étanchéité selon l'une quelconque des revendications 1 à 4, caractérisé en ce que la bague d'étanchéité (2 ; 41) est appliquée contre le second flanc (9 ; 46).
